# EUROPEAN PATENT APPLICATION

(11) **EP 4 524 952 A1**
(43) Date of publication of application: **19.03.2025**
(21) Application number: 23802775.9
(22) Date of filing: 05.05.2023
(51) Int. Cl.: G10H 1/36

(54) **AUDIO PROCESSING METHOD AND APPARATUS, DEVICE, AND STORAGE MEDIUM**

(30) Priority: 07.05.2022 CN 202210495456
(71) Applicant: Beijing Zitiao Network Technology Co., Ltd., Beijing 100190 (CN); BEIJING BYTEDANCE NETWORK TECHNOLOGY CO., LTD., Beijing 100041 (CN)
(72) Inventor: YUAN, Shuai, Beijing 100028 (CN); MENG, Wenhan, Beijing 100028 (CN); HUANG, Yixiu, Beijing 100028 (CN)
(74) Representative: Dentons UK and Middle East LLP
(86) International application number: PCT/CN2023/092377
(87) International publication number: WO 2023/217003

(57) **Abstract**

The present disclosure provides an audio processing method and apparatus, an apparatus and a storage medium, the method includes: acquiring a vocal in a piece of audio uploaded by a user in response to a first instruction; acquiring an accompaniment from another piece of audio uploaded by the user in response to the second instruction; and acquiring a target audio by mixing the vocal and the accompaniment in response to a third instruction.

## Description

### CROSS-REFERENCE TO RELATED APPLICATIONS

This application claims priority to Chinese Patent Application No. 202210495456.4, filed to China National Intellectual Property Administration on May 07, 2022 and entitled "AUDIO PROCESSING METHOD AND APPARATUS, DEVICE AND STORAGE MEDIUM", the contents of which are hereby incorporated by reference in its entirety.

### TECHNICAL FIELD

Embodiments of the present disclosure relate to the field of human-computer interaction technology, and in particular, to an audio processing method and apparatus, a device and a storage medium.

### BACKGROUND

With the continuous growth of media content and the rapid development of computer technology, users have the need to interact with media and create personalized media content in the process of using media data. Audio editing is a common way to create media content.

The existing audio editing functions are limited and cannot meet the needs of users for processing and creating based on different audio.

### SUMMARY

Embodiments of the present disclosure provide an audio processing method and apparatus, a device and a storage medium to improve the efficiency of audio processing and meet the individual needs of users for audio production.

In a first aspect, an embodiment of the present disclosure provides an audio processing method, including:
acquiring a vocal in response to a first instruction;
acquiring an accompaniment in response to a second instruction; and
acquiring a target audio by mixing the vocal and the accompaniment in response to a third instruction.

In a second aspect, an embodiment of the present disclosure provides an audio processing apparatus, including:
an acquisition module, configured to acquire a vocal in response to a first instruction;
the acquisition module is further configured to acquire an accompaniment in response to a second instruction; and
a processing module, configured to acquire a target audio by mixing the vocal and the accompaniment in response to a third instruction.

In a third aspect, an embodiment of the present disclosure provides an electronic device, including: a processor and a memory;
the memory stores a computer-executed instruction;
the processor executes the computer-executed instruction stored in the memory to enable the at least one processor to execute the audio processing method described above in the first aspect and various possible designs of the first aspect.

In a fourth aspect, an embodiment of the present disclosure provides a computer-readable memory medium in which the computer-readable memory medium stores a computer-executed instruction, and when the processor executes the computer-executed instruction, the audio processing method described above in the first aspect and various possible designs of the first aspect are implemented.

In a fifth aspect, an embodiment of the present disclosure provides a computer program product, including a computer program, when the computer program is executed by a processor, the audio processing method described above in the first aspect and various possible designs of the first aspect are implemented.

In a sixth aspect, an embodiment of the present disclosure provides a computer program, when the computer program is executed by a processor, the image processing method described above in the first aspect and various possible designs of the first aspect are implemented.

### BRIEF DESCRIPTION OF DRAWINGS

In order to more clearly illustrate the technical scheme in the embodiments of the present disclosure or in the prior art, a brief description of the drawings required to be used in the embodiments or in the description of the prior art is presented below. It is obvious that the drawings in the description below are embodiments of the present disclosure. For ordinary technical personnel in the field, other drawings can be acquired according to these drawings without any creative labor.
FIG. 1 is an application scenario diagram of an audio processing method provided by an embodiment of the present disclosure.
FIG. 2 is a first flow diagram of an audio processing method provided by an embodiment of the present disclosure.
FIG. 3 is a second flow diagram of an audio processing method provided by an embodiment of the present disclosure.
FIG. 4 is a first diagram of a user interface provided by an embodiment of the present disclosure.
FIG. 5 is a first diagram of a user interface change provided by an embodiment of the present disclosure.
FIG. 6a is a second diagram of a user interface provided by an embodiment of the present disclosure.
FIG. 6b is a third diagram of a user interface provided by an embodiment of the present disclosure.
FIG. 7a is a second diagram of a user interface change provided by an embodiment of the present disclosure.
FIG. 7b is a third diagram of a user interface change provided by an embodiment of the present disclosure.
FIG. 7c is a fourth diagram of a user interface change provided by an embodiment of the present disclosure.
FIG. 8 is a fifth diagram of a user interface change provided by an embodiment of the present disclosure.
FIG. 9 is a fourth diagram of a user interface provided by an embodiment of the present disclosure.
FIG. 10a is a sixth diagram of a user interface change provided by an embodiment of the present disclosure.
FIG. 10b is a seventh diagram of a user interface change provided by an embodiment of the present disclosure.
FIG. 11 is a structural block diagram of an audio processing apparatus provided by an embodiment of the present disclosure.
FIG. 12 is a structural block diagram of an electronic device provided by an embodiment of the present disclosure.

### DESCRIPTION OF EMBODIMENTS

In order to make the purpose, technical scheme and advantages of the embodiments of the present disclosure clearer, the technical scheme in the embodiments of the present disclosure will be clearly and completely described in combination with the drawings attached to the embodiments of the present disclosure. Obviously, the described embodiment is a part of the disclosure embodiment, but not the whole embodiment. Based on the embodiments in the present disclosure, all other embodiments acquired by ordinary technical personnel in the field without creative labor are subject to the protection of the present disclosure.

Aiming at, but not limited to, one or more of the above problems, the embodiments of the present disclosure proposes an audio processing method. The method provides a visual intelligent audio processing process, can automatically realize the integration of a vocal and an accompaniment in the target audio, and directly performs audio editing after intelligent processing, and can package and output the material package when exporting the audio processing file, meet the individual needs of different users, improve the user experience of audio production.

In order to facilitate the understanding of the technical solution provided in the present disclosure, the following first gives a brief introduction to the application scenario of the audio processing method.

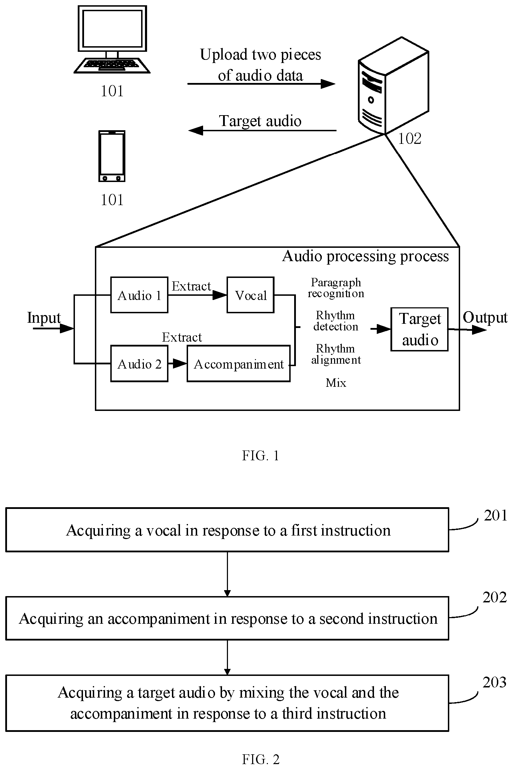

FIG. 1 is an application scenario diagram of an audio processing method provided by an embodiment of the present disclosure. As shown in FIG. 1, the application scenario provided in this embodiment includes a terminal device 101 and a server 102, and the terminal device 101 communicates with the server 102. The terminal 101 presets an audio processing application APP that provides the user with one or more of the following functions: a recording studio editing function, an accompaniment extraction function, an audio mashup function, a style synthesis function, and an audio optimization function.

As an example, a user accesses the server 102 through the terminal 101, for example, by uploading two pieces of audio data through the terminal 101. The server 102 first respectively performs sound source extraction (including a vocal, a musical instrument, etc.) on the two pieces of audio data, such as acquiring the vocal in one piece of audio data and the accompaniment in another piece of audio data; secondly, paragraph recognition of the vocal and the accompaniment is carried out to acquire the target segment of the vocal and the accompaniment (such as the climax segment); finally, rhythm detection and rhythm alignment are performed on the target segments of the vocal and the accompaniment to generate the mixed target audio. The server 102 sends the target audio to the terminal device 101 for the user to audition, save, and share the target audio, or post-process the target audio.

The terminal device in this embodiment can be any electronic device with information display function, including but not limited to a smart phone, a laptop, a tablet, a smart vehicle device, a smart wearable device, a smart screen, etc.

The server of this embodiment can be a common server or a cloud server, and the cloud server is also called a cloud computing server or a cloud host, which is a host product in the cloud computing service system. The server can also be a server for a distributed system, or a server that combines block chain.

It should be noted that the product implementation form of the present disclosure is a program code contained in platform software and deployed on an electronic device (which can also be a computing cloud or a mobile terminal and other hardware with computing capability). For example, the program code of the present disclosure may be stored inside an electronic device. At runtime, the program code runs in a host memory and/or a GPU memory of the electronic device.

It should also be noted that the technical solution provided in the present disclosure may be applied to a server or a terminal device, or a part of the processing may be performed by the terminal device and a part of the processing may be performed by the server, without any limitation to this embodiment.

The following is a detailed description of the technical solution provided by the present disclosure in combination with several specific embodiments. The following embodiments may be combined with each other and may not be repeated in some embodiments for the same or similar concepts or processes.

The embodiments of the present disclosure provide an audio processing method and apparatus, a device, and a storage medium, the method includes: acquiring a vocal in a piece of audio uploaded by a user in response to a first instruction; acquiring an accompaniment from another piece of audio uploaded by the user in response to the second instruction; mixing and matching the vocal and the accompaniment in the two pieces of audio automatically in response to the third instruction, the efficiency of audio processing is improved and the personalized needs of users for audio production is met.

FIG. 2 is a first flow diagram of an audio processing method provided by an embodiment of the present disclosure. As shown in FIG. 2, the method of the embodiment can be applied to a terminal device or a server, and the audio processing method includes the following steps.

Step 201, acquiring a vocal in response to a first instruction.

In this embodiment, the acquiring the vocal in response to the first instruction includes: acquiring audio data containing only the vocal in response to the first instruction.

In a possible implementation, the first instruction is generated in response to the user touching the screen control, and the vocal is acquired according to the first instruction.

In a possible implementation, the first instruction is generated in response to the user clicking on the screen control with the mouse, and the vocal is acquired according to the first instruction.

In a possible implementation, the first instruction is generated in response to the voice control of the user, and the vocal is acquired according to the first instruction.

It should be noted that the first instruction is not only used to indicate the acquisition of the audio data containing the vocal, but also to trigger the extraction of the vocal portion of the audio data.

Step 202, acquiring an accompaniment in response to a second instruction.

In this embodiment, the acquiring the accompaniment in response to the second instruction includes: acquiring an audio data containing only the accompaniment in response to the second instruction.

In a possible implementation, the second instruction is generated in response to the user touching the screen control, and the accompaniment is acquired according to the second instruction.

In a possible implementation, the second instruction is generated in response to the user clicking on the screen control with the mouse, the accompaniment is acquired according to the second instruction.

In a possible implementation, the second instruction is generated in response to the voice control of the user, and the accompaniment is acquired according to the second instruction.

It should be noted that the second instruction is not only used to indicate the acquisition of the audio data containing the accompaniment, but also to trigger the extraction of the accompaniment portion of the audio data.

Step 203, acquiring a target audio by mixing the vocal and the accompaniment in response to a third instruction.

In a possible implementation, the third instruction is generated in response to the user touching the screen control, the voice and the accompaniment are mixed to acquire the target audio according to the third instruction.

In a possible implementation, the third instruction is generated in response to the user clicking on the screen control with the mouse, the voice and accompaniment are mixed to acquire the target audio according to the third instruction.

In a possible implementation, the third instruction is generated in response to the voice control of the user, the voice and accompaniment are mixed to acquire the target audio according to the third instruction.

In the embodiment of the present disclosure, mixing of the vocal and the accompaniment can also be described as performing mashup of the vocal and the accompaniment. The user uploads two pieces of audio data that need for mashup by means of interface touch control or voice control, and the vocal is extracted from one piece of the audio data and the accompaniment is extracted from the other piece of the audio data respectively. The automatic mixing and matching of the vocal and the accompaniment in two pieces of the audio is realized, the efficiency of audio processing is improved, and the personalized needs of users for audio production is met.

On the basis of the above embodiments, the above audio processing process is introduced in detail through a specific embodiment.

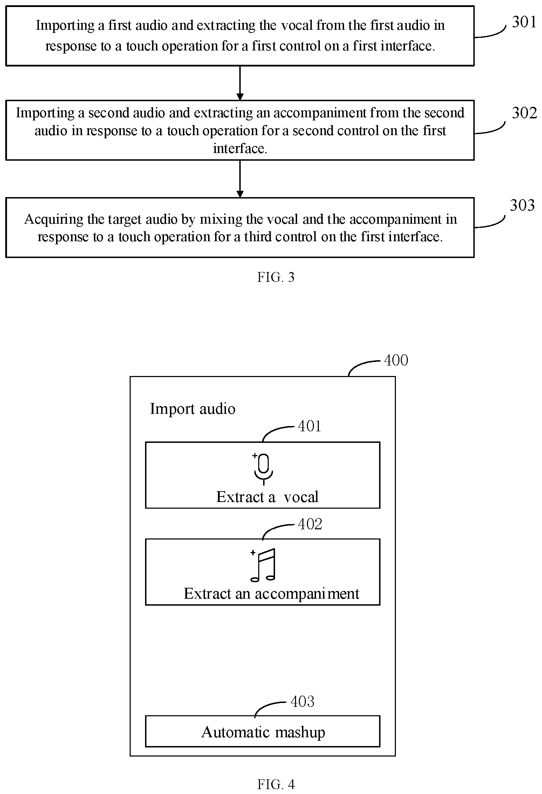

FIG. 3 is a second flow diagram of an audio processing method provided by an embodiment of the present disclosure. As shown in FIG. 3, the method of this embodiment can be applied to a terminal device or a server, and the audio processing method includes:

Step 301, importing a first audio and extracting the vocal from the first audio in response to a touch operation for a first control on a first interface.

Step 302, importing a second audio and extracting an accompaniment from the second audio in response to a touch operation for a second control on the first interface.

Step 303, acquiring the target audio by mixing the vocal and the accompaniment in response to a touch operation for a third control on the first interface.

In this embodiment, the first interface may also be described as an audio import interface. Optionally, the touch operation for the first control on the first interface, the touch operation for the second control, and the touch operation for the third control include but are not limited to click operations.

Illustratively, FIG. 4 is a first diagram of a user interface provided by an embodiment of the present disclosure. As shown in FIG. 4, a first interface 400 includes a first control 401, a second control 402, and a third control 403. The first control 401 is used to extract the vocal from the audio data, the second control 402 is used to extract the accompaniment from the audio data, and the third control 403 is used to automatically perform mashup (mix) on the extracted vocal and accompaniment.

It should be pointed out that the interface controls in this embodiment include but are not limited to icons, buttons, drop-down boxes, sliders, etc. The touch operations include but are not limited to click operations, long press operations, double click operations, sliding operations, etc.

Optionally, in some embodiments, the first voice input by the user is acquired in response to a long-press operation for the first control on the first interface, the first instruction is generated by the speech recognition, the first audio is imported according to the first instruction, and the vocal is extracted from the first audio.

Optionally, in some embodiments, the second voice input by the user is acquired in response to a long-press operation for the second control on the first interface, the second instruction is generated by the speech recognition, the second audio is imported according to the second instruction, and the accompaniment is extracted from the second audio.

Optionally, in some embodiments, the third voice input by the user is acquired in response to a long-press operation for the third control on the first interface, the third instruction is generated by the speech recognition, and the vocal and accompaniment are mixed according to the third instruction to acquire the target audio.

Optionally, in some embodiments, the user may also enter a control voice via a device physical button, such as a smartphone side key, to import the first or second audio as described above or to perform audio mixing.

Based on the first interface shown in FIG. 4, the touch operation of the user and interface changes in the first interface are graphically illustrated below.

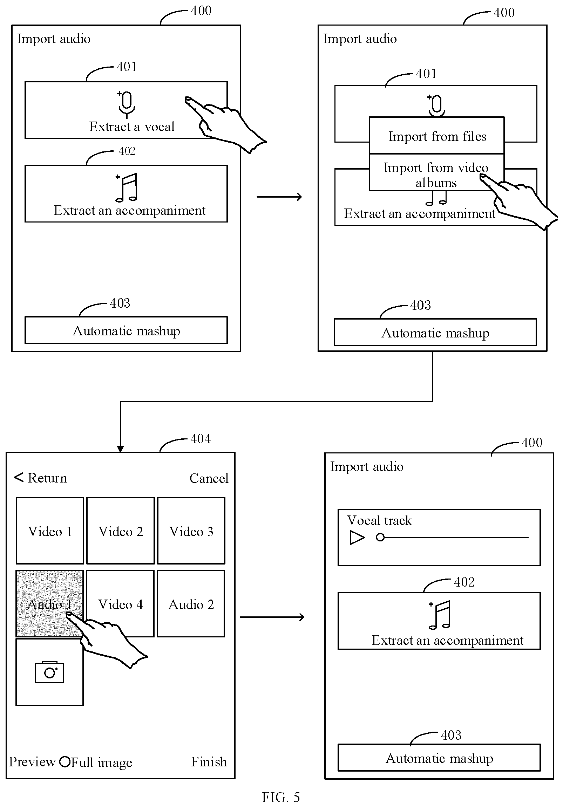

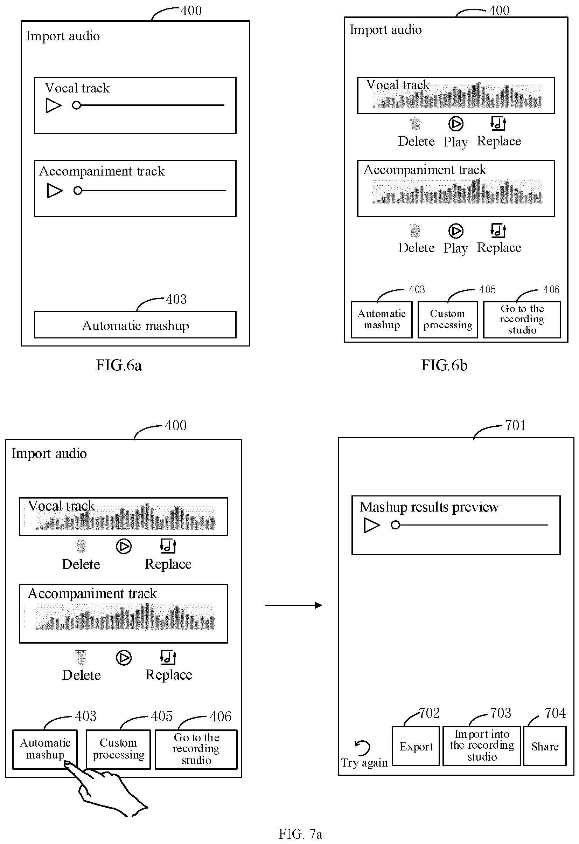

As an example, FIG. 5 is a first diagram of a user interface change provided by an embodiment of the present disclosure, and FIG. 6a is a second diagram of a user interface provided by an embodiment of the present disclosure. As shown in FIG. 5, first of all, the user can import audio data by clicking the first control 401 of the first interface 400, and the user can choose to import the audio data from a files or a video album, for example, the user selects audio 1 in the video album interface 404 in FIG. 5. While importing the audio data, the vocal part of the audio data is extracted to acquire the vocal, and the vocal is visually displayed in the first interface 400, such as the vocal track shown in FIG. 5 or FIG. 6a. The user can audition for the extracted voice. Secondly, the user can import another audio data by clicking the second control 402 of the first interface 400. While importing the audio data, the accompaniment part of the audio data is extracted to acquire the accompaniment, and the accompaniment is visualized in the first interface 400, the user can audition for the extracted accompaniment, such as the accompaniment soundtrack shown in FIG. 6a. The user can audition for the extracted accompaniment. Finally, the user automatically perform mashup on the extracted vocal and the extracted accompaniment to acquire the target audio by clicking on the third control 403 of the first interface 400.

For example, the user uploads the recorded playing and singing audio and uploads the existing finished music work at the same time. By extracting the vocal in the user's playing and singing video and the accompaniment in the finished music work, the extracted vocal and the extracted accompaniment are mixed to acquire the target audio, the target audio integrates the user's vocal and the existing accompaniment. The above audio processing process greatly facilitates the users to create personalized music and meet the music creation needs of different users.

Illustratively, FIG. 6b is a third diagram of a user interface provided by an embodiment of the present disclosure. The interface shown in FIG. 6b can be seen as an optimized version of the interface shown in FIG. 6a, including more functional controls. As shown in FIG. 6b, after the user uploads two pieces of audio data, the first interface 400 includes: a first playing control, a first deleting control and a first replacing control, which are associated with the vocal, the first playing control is used to audition for the vocal, the first deleting control is used to delete the vocal, and the first replacing control is used to replace the vocal; and, the second playing control, the second deleting control, and the second replacing control, which are associated with the accompaniment, the second playing control is used to audition for the accompaniment, the second deleting control is used to delete the accompaniment, and the second replacing control is used to replace the accompaniment.

Optionally, the first interface 400 further includes: a fourth control 405 and a fifth control 406. The fourth control 405 is used to trigger custom processing of the vocal and/or the accompaniment, the custom processing includes audio clip of the vocal and/or the accompaniment. The fifth control is used to trigger audio editing of the vocal and/or the accompaniment (go to the recording studio for audio editing or processing), as detailed below.

In an optional embodiment of this embodiment, the acquiring the target audio by mixing the vocal and the accompaniment includes: acquiring a vocal segment of the vocal and an accompaniment segment of the accompaniment; acquiring the target audio by mixing the vocal segment and the accompaniment segment. That is, when mixing the vocal and the accompaniment, the mixable vocal segment and the mixable accompaniment segment are first extracted respectively from the vocal and accompaniment, and then the audio mixing is performed according to the vocal segment and accompaniment segment to acquire the target audio. Specifically, the vocal segment and accompaniment segment can be acquired by the following embodiments.

In an optional implementation, the vocal and the accompaniment are input into a paragraph recognition model respectively to acquire the vocal segment of the vocal and the accompaniment segment of the accompaniment. The paragraph recognition model is used to identify the target segment of audio. Specifically, the vocal is input into the paragraph recognition model to acquire the target segment of the vocal. The accompaniment is input into the paragraph recognition model to acquire the target segment of the accompaniment. The target segment can be a chorus segment, a climax segment, or other segment of the audio, for example, the target segment is a repeating segment in a song.

Optionally, the paragraph recognition model can be trained using a deep learning model, and this embodiment does not limit the structure of the deep learning model. The embodiment realizes the intelligent extraction of the vocal segment and the accompaniment segment by training the model, which can improve the efficiency and accuracy of the audio processing.

Optionally, the training process of the paragraph recognition model includes acquiring a training data set, where the training data set includes multiple audio samples and labeling information for each audio sample, and the labeling information is used to indicate the target segment corresponding to the audio sample; taking the multiple audio samples in the training data set as the input of the paragraph recognition model; taking the labeling information of each audio sample in the training data set as the output of the paragraph recognition model; training the paragraph recognition model until the loss function of the paragraph recognition model converges; stopping the training of the paragraph recognition model; and obtaining the model parameter of the trained paragraph recognition model.

In this embodiment, the paragraph recognition model can be used to analyze the rhythm and loudness changes and other information of the input audio, identify the audio prelude, verse, chorus, interlude, bridge, epilogue, mute and other segments, and extract the most likely chorus, namely the climax. Specifically, the start and end time stamps of different segments are extracted, and subsequent clipping is carried out to finally output the target segment of the audio.

In an optional implementation, displaying a soundtrack of a vocal and a soundtrack of the accompaniment on the second interface in response to a touch operation for a fourth control on a first interface; acquiring the vocal segment in response to an editing operation for the soundtrack of the vocal; and acquiring the accompaniment segment in response to an editing operation for the soundtrack of the accompaniment.

This implementation acquires the target segment of the vocal and the target segment of the accompaniment through the user editing the segment on the interface for subsequent audio mixing. This method increases the user's custom processing of imported vocal and accompaniment, improves the user's participation in audio production, and meets the needs of different users in audio production.

In an optional embodiment of this embodiment, the acquiring the target audio by mixing the vocal and the accompaniment includes: acquiring a first rhythm of the vocal and a second rhythm of the accompaniment, performing rhythm alignment on the first rhythm of the vocal and the second rhythm of the accompaniment, and mixing based on the aligned vocal and accompaniment to acquire the target audio.

In an optional implementation, the second rhythm of the accompaniment is adjusted based on the first rhythm of the vocal, so that the first rhythm of the vocal is consistent with the second rhythm of the accompaniment.

In an optional implementation, the first rhythm of the vocal is adjusted based on the second rhythm of the accompaniment, so that the first rhythm of the vocal is consistent with the second rhythm of the accompaniment.

In an optional embodiment of this embodiment, the acquiring the target audio by mixing the vocal and the accompaniment includes: acquiring the target audio by mixing the vocal segment of the vocal and the accompaniment segment of the accompaniment. Specifically, the first rhythm of the vocal segment and the second rhythm of the accompaniment segment are acquired, and the rhythm alignment is performed on the first rhythm of the vocal segment and the second rhythm of the accompaniment segment, the aligned vocal segment and the accompaniment segment is mixed to acquire the target audio.

In an optional implementation, the second rhythm of the accompaniment segment is adjusted based on the first rhythm of the vocal segment, so that the first rhythm of the vocal segment is consistent with the second rhythm of the accompaniment segment.

In an optional implementation, the first rhythm of the vocal segment is adjusted based on the second rhythm of the accompaniment segment, so that the first rhythm of the vocal segment is consistent with the second rhythm of the accompaniment segment.

Based on the above several embodiments of the rhythm alignment, it can be seen that:
by acquiring the first rhythm of the third audio and the second rhythm of the fourth audio; performing rhythm alignment on the first rhythm of the third audio and the second rhythm of the fourth audio; and acquiring the target audio based on the aligned third audio and fourth audio. Specifically, the second rhythm of the fourth audio is adjusted based on the first rhythm of the third audio to make the rhythms of the third audio and the fourth audio are consistent.

The third audio may be one audio out of the vocal and the accompaniment, and correspondingly, the fourth audio may be another audio out of the vocal and the accompaniment, or, the third audio may be one audio out of the vocal segment and the accompaniment segment, and the fourth audio may be another audio out of the vocal segment and the accompaniment segment.

It should be noted that the above embodiments involve the rhythm detection of the audio or the audio segment, which is used to detect the downbeat time in the beat and infer the speed of the entire audio or audio segment. The adjustment of the audio rhythm involves stretching or compressing the audio rhythm, usually by aligning the rhythm of the vocal track to the accompaniment track, and processing the vocal track file by stretching or compressing the audio.

Through the rhythm detection and alignment of two audio or two audio segments, the vocal and accompaniment in the mixed target audio are better integrated, and the audio processing effect is improved.

In an optional embodiment of this embodiment, in response to a touch operation for a third control on the first interface, the interface jumps to a third interface, where the third interface includes a third playing control, the third playing control is used to trigger playing of the target audio. The third interface is the audio mixing preview interface. The following is a graphical illustration of the user interface changes to acquire the target audio after the user imports two audio segments.

Illustratively, FIG. 7a is a second diagram of a user interface change provided by an embodiment of the present disclosure. As shown in FIG. 7a, after the user uploads two pieces of audio data, the vocal and accompaniment can be visually displayed in the first interface 400, the user can directly click the third control 403 to automatically perform mashup on the vocal and accompaniment, and the target audio after mixing can be visualized in the third interface 701. In the third interface 701, users can audition for, export, share the target audio after audio mixing, or choose to play again, or import to the recording studio for further audio processing.

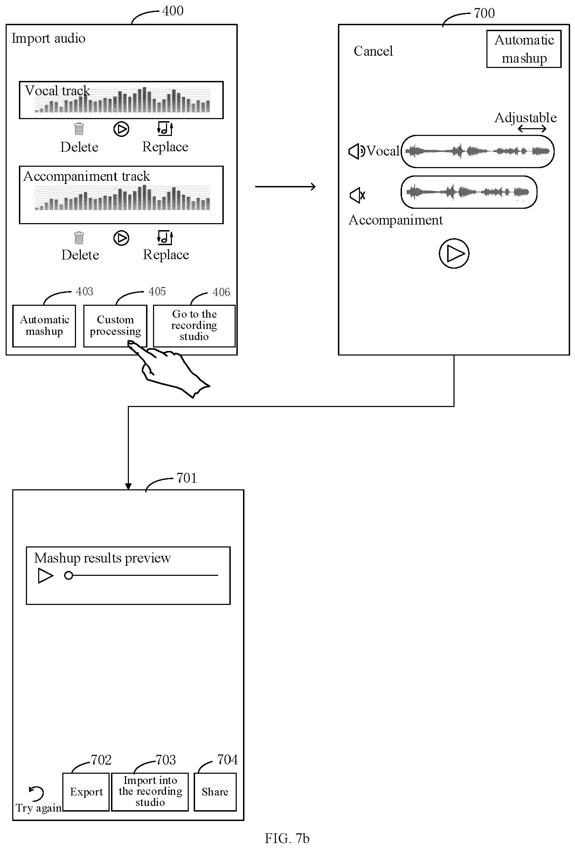

Illustratively, FIG. 7b is a third diagram of a user interface change provided by an embodiment of the present disclosure. As shown in 7b, the user can also, after uploading two pieces of audio data, click on the fourth control 405 of the first interface 400 to trigger a custom processing of the vocal and/or the accompaniment, and the interface jumps to the second interface 700. The user can make audio clips of the vocal and/or the accompaniment in the second interface 700, such as capturing the climax segment of the vocal and the climax segment of the accompaniment, and the user can also audition for the clipped climax segment of the vocal or the accompaniment in the second interface 700. After finishing the audio clip, jumping to the third interface 701 by clicking on the "automatic mashup" control of the second interface 700.

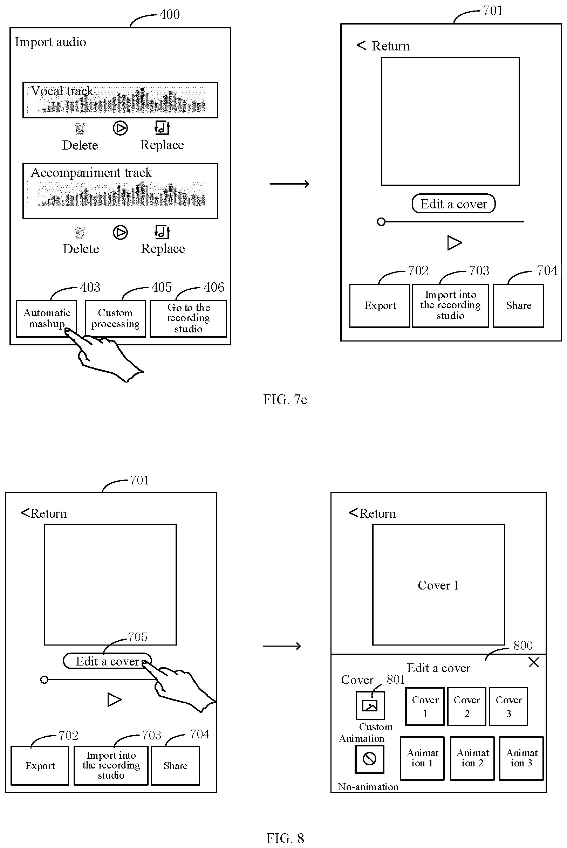

Illustratively, FIG. 7c is a fourth diagram of a user interface change provided by an embodiment of the present disclosure. As shown in FIG. 7c, after uploading two pieces of audio data, the user can directly click on the third control 403 of the first interface 400 to automatically perform mashup on the vocal and the accompaniment. In the third interface 701 as shown in FIG. 7c, the user can audition for, export and share the target audio after audio mixing, or choose to delete it, or import it to the recording studio for further audio processing, and can also set the cover of the target audio in the third interface 701 shown in FIG. 7c. The third interface 701 shown in FIG. 7c can be regarded as an optimized version of the third interface 701 shown in FIG. 7a.

Based on the above graphical third interface, the following will provide a detailed explanation of each functional control on the third interface through several specific embodiments.

In an optional embodiment of this embodiment, displaying a first window in response to a touch operation for a cover editing control on a third interface; acquiring a target cover in response to the control selection operation on the first window. The first window includes a cover import control, one or more preset static cover controls, and one or more preset animation effect controls.

Optionally, the target cover is a static cover or a dynamic cover.

In an optional implementation, if the target cover is the dynamic cover, the acquiring the target cover in response to the control selection operation on the first window includes: acquiring a static cover and animation effect in response to the control selection operation on the first window; generating a dynamic cover changing with an audio characteristic of the target audio according to the audio characteristics of the target audio, the static cover and the animation effect. The audio characteristic includes an audio beat and/or volume.

Illustratively, FIG. 8 is a fifth diagram of a user interface change provided by an embodiment of the present disclosure. As shown in FIG. 8, the user clicks on the cover editing control 705 on the third interface 701 to pop up the first window 800 at the bottom of the third interface 701. The first window 800 includes a cover import control 801, multiple preset static covers, such as covers 1 to 3 in FIG. 8, and multiple animation effects, such as animations 1 to 3 in FIG. 8. The user can import a custom image from a local album by clicking on the cover import control 801 to use the custom image as a static cover, or directly select a preset static cover. The user can directly select a preset animation or no animation. After completing the editing operation for the cover, the target audio and the generated target cover are exported to an album or a file system, or are shared to a specified application, or are imported to a recording studio for further audio processing.

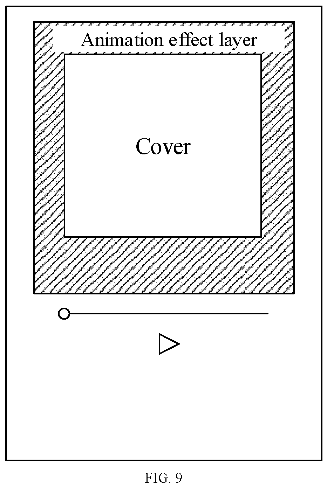

Illustratively, FIG. 9 is a fourth diagram of a user interface provided by an embodiment of the present disclosure. As shown in FIG. 9, the user sets the static cover and animation effect of the target audio through FIG. 8, the synthesized target cover can be previewed in the audio mixing preview interface. The target cover includes the static cover and animation effect that changes with the audio characteristic of the target audio. The animation effect can be regarded as adding an animation effect layer at the bottom of the static cover. The animation effect can be dynamically changed anywhere around the static cover.

By providing users with the function of setting the audio cover, this embodiment realizes the personalized editing of the cover by different users and improves the user experience of audio production.

In an optional embodiment of this embodiment, the data associated with the target audio is exported to the target location in response to an export instruction on the third interface. Optionally, the target location includes an album or a file system.

Illustratively, as shown in FIG. 7a to 7c, the user can click on the export control 702 on the third interface 701 to trigger the first selection window on which the user can choose to export the data associated with the target audio to the album or the file system.

Optionally, in some embodiments, a fourth voice input by the user is acquired in response to a long-press operation for an export control 702 on a third interface 701, an export instruction is generated by speech recognition, and the data associated with the target audio is exported to the target location according to the export instruction.

In an optional embodiment of this embodiment, the data associated with the target audio is shared to the target application in response to a sharing instruction on the third interface.

For example, as shown in FIG. 7a to 7c, the user can click on the sharing control 704 on the third interface 701 to trigger the second selection window on which the user can choose to share the data associated with the target audio to the target application, or the specified user in the target application.

Optionally, in some embodiments, a fifth voice input by the user is acquired in response to the long-press operation for the sharing control 704 on the third interface 701, the sharing instruction is generated by speech recognition, and the data associated with the target audio is shared, according to the sharing instruction, to the target application or the specified user in the target application.

Optionally, the data associated with the target audio includes at least one of the following: the target audio, the vocal, the accompaniment, a vocal segment of the vocal, an accompaniment segment of the accompaniment, a static cover of the target audio, and a dynamic cover of the target audio.

In summary, the data exported or shared by the user can contain only the target audio, or it can contain all the intermediate data during the process of acquiring the target audio. If the exported or shared data is too large, the data can be compressed and then the compressed data is exported locally or shared with other users. If the shared data received by other users contains all the intermediate data in the process of acquiring the target audio, the user can not only play the target audio, but also query or re-edit the intermediate data to generate new target audio, so as to realize the cooperation of multiple users in audio production, increase the interaction between users, and improve the user experience.

In an optional embodiment of this embodiment, jumping from a third interface to a fourth interface in response to a touch operation for an audio editing control on the third interface, where the fourth interface includes an audio processing function control. The fourth interface is the interface for audio post-processing, which can also be described as a recording studio interface, the user can perform audio post-processing on the vocal and the accompaniment in the target audio on the fourth interface.

In an optional embodiment of this embodiment, jumping from a third interface to a fourth interface in response to a touch operation for an audio editing control on the third interface, where the fourth interface includes a trigger control associated with the audio processing function control, and the trigger control is used to trigger display of the audio processing function control.

Optional, the audio processing function control include one or more of the following:
an audio optimization control, configured to trigger editing of audio to optimize audio;
an accompaniment extraction control, configured to trigger extraction of the vocal and/or the accompaniment from audio;
a style composition control, configured to trigger extraction of the vocal from audio, and mix and edit the extracted vocal with a preset accompaniment;
an audio mashup control, configured to trigger the extraction of the vocal from first audio, the extraction of the accompaniment from second audio, and mix and edit the extracted vocal and the extracted accompaniment.

Optionally, the audio optimization includes the optimization processing of the vocal and/or the accompaniment of the playing and singing audio of the user, that is, the audio optimization includes the optimization of playing and singing, such as the optimization processing of male guitar, female guitar, male piano, female piano, etc.

Optionally, the extraction of the accompaniment includes removal of vocal, removal of instruments, and other extraction processing.

Optionally, the style synthesis includes such as hot songs in car, classic pop, heart moments, relaxation moments, childhood memories and other style optimization.

Optionally, the audio mashup includes optimization processing for rhythm alignment, shifting, etc.

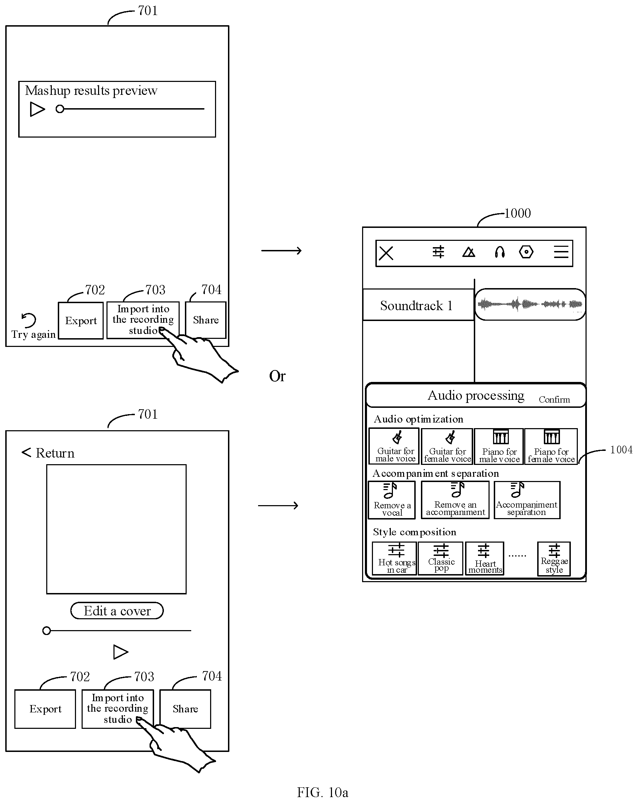

Illustratively, FIG. 10a is a sixth diagram of a user interface change provided by an embodiment of the present disclosure. As shown in FIG. 10a, the user clicks on the audio editing control 703 on the third interface 701, and the interface jumps to the fourth interface 1000. The target audio mixed with the vocal and the accompaniment is displayed directly on soundtrack 1 on the fourth interface 1000, and several optional audio processing controls are displayed in the audio processing window 1004 on the fourth interface 1000.

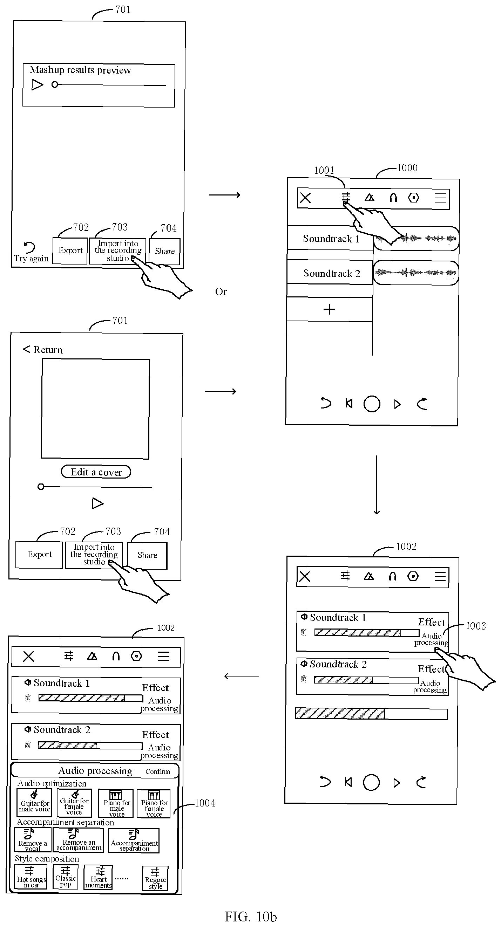

Illustratively, FIG. 10b is a seventh diagram of a user interface change provided by an embodiment of the present disclosure. As shown in FIG. 10b, the user clicks on the audio editing control 703 on the third interface 701, the interface jumps to the fourth interface 1000. The user can perform audio post-processing on the vocal and the accompaniment of the target audio in the fourth interface 1000, for example, soundtrack 1 of the fourth interface 1000 corresponds to the vocal, soundtrack 2 of the fourth interface 1000 corresponds to the accompaniment, and perform audio clips on the vocal and the accompaniment. The user can also click on the interface switch control 1001 on the fourth interface 1000, or swipe left or right to enter the fifth interface 1002, the fifth interface 1002 includes the trigger control 1003 associated with the audio processing function control, and the trigger control 1003 is used to trigger and display the audio processing function control. The audio processing controls includes the multiple optional controls shown in the audio processing window 1004 in FIG. 10b. In the fifth interface 1003, users can add effect to the vocal of soundtrack 1 and the accompaniment of soundtrack 2, perform further audio processing, adjust the volume and other operations, and also adjust the overall volume of vocal and accompaniment in the fifth interface 1003. Among them, the effect includes reverberation, equalization, electrical sound, phase shifting, edging, filtering and so on.

In the embodiment of the present disclosure, the user imports the first audio by touching the first control on the first interface, and extracts the vocal from the first audio; then imports the second audio by touching the second control on the first interface, and extract the accompaniment from the second audio; finally, the vocal and accompaniment are mixed to acquire the target audio by touching the third control on the first interface. The above process realizes the automatic mashup of the vocal and accompaniment in two pieces of audio, improves the audio processing effect, and meets the personalized needs of users for audio production.

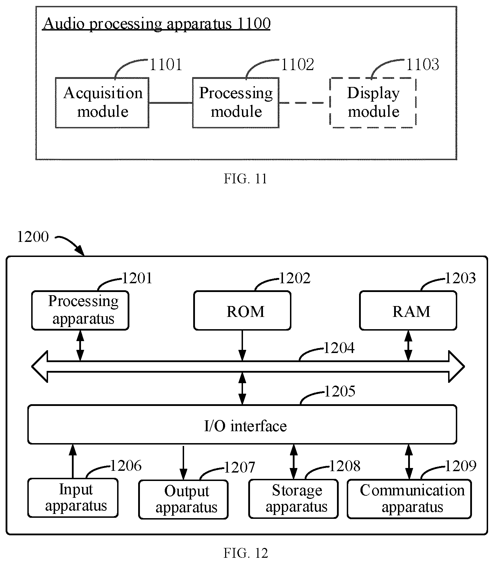

For the audio processing method corresponding to the above embodiment, FIG. 11 is a structural block diagram of an audio processing apparatus provided by an embodiment of the present disclosure. For illustrative purposes, only the portions relevant to this embodiment of the present disclosure are shown. As shown in FIG. 11, the audio processing apparatus 1100 provided in this embodiment includes an acquisition module 1101 and a processing module 1102.

The acquisition module 1101 is configured to acquire a vocal in response to a first instruction;

The acquisition module 1101 is further configured to acquire an accompaniment in response to a second instruction;
The processing module 1102 is configured to acquire a target audio by mixing the vocal and the accompaniment in response to a third instruction.

In an optional embodiment of the present disclosure, the acquisition module 1101 is configured to import first audio and extract the vocal from the first audio in response to a touch operation for a first control on a first interface;

The acquisition module 1101 is further configured to import second audio and extract the accompaniment from the second audio in response to a touch operation for a second control on the first interface.

In an optional embodiment of the present disclosure, the processing module 1102 is configured to acquire the target audio by mixing the vocal and the accompaniment in response to a touch operation for a third control on the first interface.

In an optional embodiment of the present disclosure, the processing module 1102 is configured to:
acquire a vocal segment of the vocal and an accompaniment segment of the accompaniment;
acquire the target audio by mixing the vocal segment and the accompaniment segment.

In an optional embodiment of the present disclosure, the processing module 1102 is configured to:
input the vocal and the accompaniment into a paragraph recognition model respectively to acquire the vocal segment of the vocal and the accompaniment segment of the accompaniment;
where the paragraph recognition model is configured to identify a target segment of audio.

In an optional embodiment of the present disclosure, the audio processing apparatus 1100 further includes: a display module 1103;
the display module 1103 is configured to display a soundtrack of the vocal and a soundtrack of the accompaniment on a second interface in response to a touch operation for a fourth control on a first interface;
the acquisition module 1101 is configured to acquire the vocal segment in response to an editing operation for the soundtrack of the vocal; and acquire the accompaniment segment in response to an editing operation for the soundtrack of the accompaniment.

In an optional embodiment of the present disclosure, the processing module 1102 is configured to:
acquire a first rhythm of third audio and a second rhythm of fourth audio;
perform rhythm alignment on the first rhythm of the third audio and the second rhythm of the fourth audio; and
acquire the target audio based on the aligned third audio and fourth audio;
where the third audio is one audio out of the vocal and the accompaniment, and the fourth audio is the other audio out of the vocal and the accompaniment, or, the third audio is one audio out of a vocal segment and an accompaniment segment, and the fourth audio is the other audio out of the vocal segment and the accompaniment segment..

In an optional embodiment of the present disclosure, the processing module 1102 is configured to adjust the second rhythm of the fourth audio based on the first rhythm of the third audio to make rhythms of the third audio and the fourth audio are consistent.

In an optional embodiment of the present disclosure, the first interface includes:
a first playing control, a first deleting control and a first replacing control, which are associated with the vocal, the first playing control is used to audition for the vocal, the first deleting control is used to delete the vocal, and the first replacing control is used to replace the vocal; and
a second playing control, a second deleting control, and a second replacing control, which are associated with the accompaniment, the second playing control is used to audition for the accompaniment, the second deleting control is used to delete the accompaniment, and the second replacing control is used to replace the accompaniment.

In an optional embodiment of the present disclosure, the processing module 1102 is configured to jump to a third interface in response to a touch operation for the third control on the first interface, where the third interface includes a third playing control, and the third playing control is used to trigger playing of the target audio.

In an optional embodiment of the present disclosure, the display module 1103 is configured to display a first window in response to a touch operation for a cover editing control on a third interface, where the first window includes a cover import control, one or more preset static cover controls, and one or more preset animation effect controls;
the acquisition module 1101 is configured to acquire a target cover in response to a control selection operation on the first window; where the target cover is a static cover or a dynamic cover.

In an optional embodiment of the present disclosure, the acquisition module 1101 is configured to acquire a static cover and animation effect in response to a control selection operation on the first window;
the processing module 1102 is configured to generate a dynamic cover changing with an audio characteristic of the target audio according to the audio characteristic of the target audio, the static cover and the animation effect;
where the audio characteristic includes an audio beat and/or volume.

In an optional embodiment of the present disclosure, the processing module 1102 is configured to export data associated with the target audio to a target location in response to an export instruction on a third interface; where the target location includes an album or a file system.

In an optional embodiment of the present disclosure, the processing module 1102 is configured to share data associated with the target audio to a target application in response to a sharing instruction on a third interface.

In an optional embodiment of the present disclosure, the data associated with the target audio includes at least one of the following:
the target audio, the vocal, the accompaniment, a vocal segment of the vocal, an accompaniment segment of the accompaniment, a static cover of the target audio, and a dynamic cover of the target audio.

In an optional embodiment of the present disclosure, the processing module 1102 is configured to jump from a third interface to a fourth interface in response to a touch operation for an audio editing control on the third interface, where the fourth interface includes an audio processing function control or a trigger control associated with the audio processing function control, and the trigger control is used to trigger the display of the audio processing function control;
the audio processing function control includes one or more of the following:
an audio optimization control, configured to trigger editing of audio to optimize audio;
an accompaniment extraction control, configured to trigger extraction of the vocal and/or the accompaniment from audio;
a style composition control, configured to trigger extraction of the vocal from audio, and mix and edit the extracted vocal with a preset accompaniment;
an audio mashup control, configured to trigger extraction of the vocal from first audio, trigger extraction of the accompaniment from second audio, and mix and edit the extracted vocal and the extracted accompaniment.

The audio processing apparatus provided in this embodiment can be used to execute the technical solution of the above method embodiments, the realization principles and technical effects therebetween are similar, and the embodiment will not be repeated here.

FIG. 12 is a structural block diagram of an electronic device provided by an embodiment of the present disclosure. As shown in FIG. 12, the electronic device 1200 can be either a terminal device or a server. The terminal device may include, but are not limited to, a mobile phone, a laptop computer, a digital broadcast receiver, a personal digital assistant (Personal Digital Assistant, PDA), a portable android device (Portable Android device, PAD), a portable media player (Portable Media Player, PMP), an on-board terminal (such as an on-board navigation terminal) and a fixed terminal such as a digital TV, a desktop computer and so on. The electronic device shown in FIG. 12 is merely an example and should not impose any limitations on the function and scope of use of the embodiments of the present disclosure.

As shown in FIG. 12, an electronic device 1200 can include a processing apparatus (e.g. a central processing unit, a graphics processor, etc.) 1201, which can perform various appropriate actions and processes depending on programs stored in a read only memory (Read Only Memory, ROM) 1202 or loaded into a random access memory (Random Access Memory, RAM) 1203 from storage apparatus 1208. RAM 1203 also stores various programs and data required for the operation of the electronic device 1200. The processing apparatus 1201, the ROM 1202, and the RAM 1203 are connected to each other through a bus 1204. An input/output (Input/Output, I/O) interface 1205 is also connected to the bus 1204.

Generally, the following apparatus can be connected to the I/O interface 1205: including: input apparatus 1206 such as touch screen, touchpad, keyboard, mouse, camera, microphone, accelerometer, gyroscope, etc.; an output device 1207 such as a liquid crystal display (Liquid Crystal Display, LCD), loudspeaker, vibrator, etc.; a storage apparatus 1208 such as magnetic tape, hard disk, etc.; and the communication apparatus 1209. The communication apparatus 1209 allows the electronic device 1200 to communicate wirelessly or wired with other devices to exchange data. Although FIG. 12 shows an electronic device 1200 with various apparatus, it should be understood that it is not required to implement or have all of the devices shown. May be implemented or have more or fewer devices instead.

In particular, the process described in the reference flow diagram above may be implemented as a computer software program in accordance with an embodiment of the present disclosure. For example, an embodiment of the present disclosure includes a computer program product that includes a computer program hosted on a computer readable medium, the computer program contains program code for performing the method shown in the flow diagram. In such an embodiment, the computer program can be downloaded and installed from the network via the communication apparatus 1209, or from the storage apparatus 1208, or the ROM 1202. When the computer program is executed by the processing apparatus 1201, the functions defined in the method of the embodiment of the present disclosure are performed.

It should be noted that the computer readable medium mentioned in the present disclosure may be a computer readable signal medium or a computer readable storage medium or any combination of the two. Computer readable storage medium may, for example, be, but are not limited to, electrical, magnetic, optical, electromagnetic, infrared, or semiconductor systems, equipment or devices, or any combination of the above. More specific examples of computer readable storage medium may include, but are not limited to: electrical connection with one or more wires, a portable computer disk, a hard disk, a random access memory (RAM), a read-only memory (ROM), an erasable programmable read-only memory (Erasable Programmable Read-Only Memory, EPROM or flash memory), a fiber optic, a portable compact disk read-only memory (Portable Compact Disk Read-Only Memory, CD-ROM), an optical storage device, a magnetic storage device, or any suitable combination of the foregoing. In the present disclosure, a computer readable storage medium may be any tangible medium containing or storing a program, the program may be used by or in combination with an instruction execution system, equipment or device. In the present disclosure, a computer readable signal medium may include a data signal propagated in baseband or as part of a carrier that carries computer readable program code. Such transmitted data signals may take many forms, including but not limited to electromagnetic signals, optical signals, or any suitable combination of the above. The computer-readable signal medium may also be any computer-readable medium other than the computer-readable storage medium which may send, propagate or transmit a program used by or in combination with an instruction execution system, equipment or device. The program code contained on the computer readable medium may be transmitted in any appropriate medium, including but not limited to: wire, optical cable, RF (Radio Frequency), etc., or any suitable combination of the above.

The computer readable medium may be included in the electronic device; or it may exist alone and not be incorporated into the electronic device.

The computer readable medium carries one or more programs which, when executed by the electronic device, enables the electronic device to perform the method shown in the embodiment.

Computer program code used to perform operations of the disclosure can be written in one or more programming languages, or combinations of them, the programming languages include object-oriented programming languages such as Java, Smalltalk, C++, as well as regular procedural programming languages such as the "C" language or similar programming languages. Program code may execute completely on the user's computer, partly on the user's computer, as a stand-alone package, partly on the user's computer and partly on a remote computer, or completely on a remote computer or server. In the case of a remote computer, the remote computer may connect to the user computer through any kind of Network, including a local area network (Local Area Network, LAN) or a wide area network (Wide Area Network, WAN), or, connect to an external computer (for example, using an Internet service provider to connect over the Internet).

The flow diagrams and block diagrams in the attached drawings illustrate the possible realization of the architecture, functions and operations of the systems, methods and computer program products in accordance with the various embodiments of the present disclosure. At this point, each block in a flow diagram or block diagram may represent a module, program segment, or part of code that contains one or more executable instructions to implement a specified logical function. It should also be noted that in some alternative implementations, the functions labeled in the block can also occur in a different order than those labeled in the attached drawings. For example, two blocks represented back-to-back can actually be executed mostly in parallel, and they can sometimes be executed in reverse order, depending on the functionality involved. Note also that each block in the block diagram and/or flow diagram, and the combination of blocks in the block diagram and/or flow diagram, can be implemented either with a dedicated hardware-based system that performs a specified function or operation, or with a combination of dedicated hardware and computer instructions.

The units described in an embodiment of the present disclosure may be implemented by means of software or hardware. In some cases, the name of the unit does not qualify the unit itself. For example, the first acquisition unit can also be described as "the unit that acquires at least two Internet protocol addresses".

The functions described above in this article can be performed at least in part by one or more hardware logical parts. For example, unrestrictedly, demonstration types of hardware logic parts that can be used include: a field-programmable gate array (Field-Programmable Gate Array, FPGA), an application specific integrated circuit (Application Specific Integrated Circuit, ASIC), an application specific standard product (Application Specific Standard Product, ASSP), a system on chip (System on Chip, SOC), a complex programmable logic device (Complex Programmable Logic Device, CPLD) and so on.

In the context of the present disclosure, a machine readable medium may be a tangible medium that may contain or store a program for use by or in combination with an instruction execution system, apparatus, or device. The machine readable medium may be a machine readable signal medium or a machine readable storage medium. The machine readable storage medium may include, but is not limited to an electrical, magnetic, optical, electromagnetic, infrared, or semiconductor system, apparatus, or device, or any suitable combination of the foregoing. More specific examples of the machine readable storage medium may include an electrical connection with one or more wires, a portable computer disk, a hard disk, a random access memory (RAM), a read-only memory (ROM), an erasable programmable read only memory (EPROM or a flash memory), a fiber optic, a portable compact disk read-only memory (CD-ROM), an optical storage device, a magnetic storage device, or any suitable combination of the foregoing.

In a first aspect, an audio processing method is provided according to one or more embodiments of the present disclosure, including:
acquiring a vocal in response to a first instruction;
acquiring an accompaniment in response to a second instruction; and
acquiring a target audio by mixing the vocal and the accompaniment in response to a third instruction.

According to one or more embodiments of the present disclosure, the acquiring the vocal in response to the first instruction includes:
importing a first audio and extracting the vocal from the first audio in response to a touch operation for a first control on a first interface;
the acquiring the accompaniment in response to the second instruction includes:
   importing second audio and extracting the accompaniment from the second audio in response to a touch operation for a second control on the first interface.

According to one or more embodiments of the present disclosure, the acquiring the target audio by mixing the vocal and the accompaniment in response to the third instruction includes:
acquiring the target audio by mixing the vocal and the accompaniment in response to a touch operation for a third control on the first interface.

According to one or more embodiments of the present disclosure, the acquiring the target audio by mixing the vocal and the accompaniment includes:
acquiring a vocal segment of the vocal and an accompaniment segment of the accompaniment; and
acquiring the target audio by mixing the vocal segment and the accompaniment segment.

According to one or more embodiments of the present disclosure, the acquiring the vocal segment of the vocal and the accompaniment segment of the accompaniment includes:
inputting the vocal and accompaniment into a paragraph recognition model respectively to acquire the vocal segment of the vocal and the accompaniment segment of the accompaniment;
where the paragraph recognition model is configured to identify a target segment of audio.

According to one or more embodiments of the present disclosure, the acquiring the vocal segment of the vocal and the accompaniment segment of the accompaniment includes:
displaying a soundtrack of the vocal and a soundtrack of the accompaniment on a second interface in response to a touch operation for a fourth control on a first interface;
acquiring the vocal segment in response to an editing operation for the soundtrack of the vocal; and
acquiring the accompaniment segment in response to an editing operation for the soundtrack of the accompaniment.

According to one or more embodiments of the present disclosure, the acquiring the target audio by mixing the vocal and the accompaniment includes:
acquiring a first rhythm of third audio and a second rhythm of fourth audio;
performing rhythm alignment on the first rhythm of the third audio and the second rhythm of the fourth audio; and
acquiring the target audio based on the aligned third audio and fourth audio;
where the third audio is one audio out of the vocal and the accompaniment, and the fourth audio is the other audio out of the vocal and the accompaniment, or, the third audio is one audio out of a vocal segment and an accompaniment segment, and the fourth audio is the other audio out of the vocal segment and the accompaniment segment.

According to one or more embodiments of the present disclosure, the performing the rhythm alignment on the first rhythm of the third audio and the second rhythm of the fourth audio includes:
adjusting the second rhythm of the fourth audio based on the first rhythm of the third audio to make rhythms of the third audio and the fourth audio are consistent.

According to one or more embodiments of the present disclosure, the first interface includes:
a first playing control, a first deleting control and a first replacing control, which are associated with the vocal, the first playing control is used to audition for the vocal, the first deleting control is used to delete the vocal, and the first replacing control is used to replace the vocal; and
a second playing control, a second deleting control, and a second replacing control, which are associated with the accompaniment, the second playing control is used to audition for the accompaniment, the second deleting control is used to delete the accompaniment, and the second replacing control is used to replace the accompaniment.

According to one or more embodiments of the present disclosure, jumping to a third interface in response to a touch operation for the third control on the first interface, where the third interface includes a third playing control, and the third playing control is used to trigger playing of the target audio.

According to one or more embodiments of the present disclosure, displaying a first window in response to a touch operation for a cover editing control on a third interface, where the first window includes a cover import control, one or more preset static cover controls, and one or more preset animation effect controls;
acquiring a target cover in response to a control selection operation on the first window;
where the target cover is a static cover or a dynamic cover.

According to one or more embodiments of the present disclosure, if the target cover is a dynamic cover, the acquiring the target cover in response to the control selection operation on the first window includes:
acquiring a static cover and animation effect in response to the control selection operation on the first window;
generating a dynamic cover changing with an audio characteristic of the target audio according to the audio characteristic of the target audio, the static cover and the animation effect;
where the audio characteristic includes audio beat and/or volume.

According to one or more embodiments of the present disclosure, exporting data associated with the target audio to a target location in response to an export instruction on a third interface; where the target location includes an album or a file system.

According to one or more embodiments of the present disclosure, sharing data associated with the target audio to a target application in response to a sharing instruction on the third interface.

According to one or more embodiments of this disclosure, the data associated with the target audio includes at least one of the following:
the target audio, the vocal, the accompaniment, a vocal segment of the vocal, an accompaniment segment of the accompaniment, a static cover of the target audio, and a dynamic cover of the target audio.

According to one or more embodiments of the present disclosure, jumping from a third interface to a fourth interface in response to a touch operation for an audio editing control on the third interface, where the fourth interface includes an audio processing function control or a trigger control associated with the audio processing function control, and the trigger control is used to trigger display of the audio processing function control;
the audio processing function control includes one or more of the following:
an audio optimization control, configured to trigger editing of audio to optimize audio;
an accompaniment extraction control, configured to trigger extraction of the vocal and/or the accompaniment from audio;
a style composition control, configured to trigger extraction of the vocal from audio, and mix and edit the extracted vocal with a preset accompaniment;
an audio mashup control, configured to trigger extraction of the vocal from first audio, trigger extraction of the accompaniment from second audio, and mix and edit the extracted vocal and the extracted accompaniment.

In a second aspect, an audio processing apparatus is provided according to one or more embodiments of the present disclosure, including:
an acquisition module, configured to acquire a vocal in response to a first instruction;
the acquisition module is further configured to acquire an accompaniment in response to a second instruction;
a processing module, configured to acquire target audio by mixing the vocal and the accompaniment in response to a third instruction.

According to one or more embodiments of the present disclosure, the acquisition module is configured to import first audio and extract the vocal from the first audio in response to a touch operation for a first control on a first interface;
the acquisition module is further configured to import second audio and extract the accompaniment from the second audio in response to a touch operation for a second control on the first interface.

According to one or more embodiments of the present disclosure, the processing module is configured to acquire the target audio by mixing the vocal and the accompaniment in response to a touch operation for a third control on the first interface.

According to one or more embodiments of the present disclosure, the processing module is configured to:
acquire a vocal segment of the vocal and an accompaniment segment of the accompaniment;
acquire the target audio by mixing the vocal segment and the accompaniment segment.

According to one or more embodiments of the present disclosure, the processing module is configured to:
input the vocal and the accompaniment into a paragraph recognition model respectively to acquire the vocal segment of the vocal and the accompaniment segment of the accompaniment;
where the paragraph recognition model is used to identify a target segment of the audio.

According to one or more embodiments of the present disclosure, the audio processing apparatus also includes: a display module;
the display module is configured to display a soundtrack of the vocal and a soundtrack of the accompaniment on a second interface in response to a touch operation for a fourth control on a first interface;
the acquisition module is configured to acquire the vocal segment in response to an editing operation for the soundtrack of the vocal; and acquire the accompaniment segment in response to an editing operation for the soundtrack of the accompaniment.

According to one or more embodiments of the present disclosure, the processing module is configured to:
acquire a first rhythm of third audio and a second rhythm of fourth audio;
perform rhythm alignment on the first rhythm of the third audio and the second rhythm of the fourth audio; and
acquire the target audio based on the aligned third audio and fourth audio;
where the third audio is one audio out of the vocal and the accompaniment, and the fourth audio is the other audio out of the vocal and the accompaniment, or, the third audio is one audio out of a vocal segment and an accompaniment segment, and the fourth audio is the other audio out of the vocal segment and the accompaniment segment.

According to one or more embodiments of the present disclosure, the processing module is configured to adjust the second rhythm of the fourth audio based on the first rhythm of the third audio to make rhythms of the third audio and the fourth audio are consistent.

According to one or more embodiments of the present disclosure, the first interface includes:
a first playing control, a first deleting control and a first replacing control, which are associated with the vocal, the first playing control is used to audition for the vocal, the first deleting control is used to delete the vocal, and the first replacing control is used to replace the vocal; and
a second playing control, a second deleting control, and a second replacing control, which are associated with the accompaniment, the second playing control is used to audition for the accompaniment, the second deleting control is used to delete the accompaniment, and the second replacing control is used to replace the accompaniment.

According to one or more embodiments of the present disclosure, the processing module is configured to jump to a third interface in response to a touch operation for the third control on the first interface, where the third interface includes a third playing control, and the third playing control is used to trigger playing of the target audio.

According to one or more embodiments of the present disclosure, the display module is configured to display a first window in response to a touch operation for a cover editing control on a third interface, where the first window includes a cover import control, one or more preset static cover controls, and one or more preset animation effect controls;
the acquisition module is configured to acquire a target cover in response to a control selection operation on the first window; where the target cover is a static cover or a dynamic cover.

According to one or more embodiments of the present disclosure, the acquisition module is configured to acquire a static cover and animation effect in response to a control selection operation on the first window;
the processing module is configured to generate a dynamic cover changing with an audio characteristic of the target audio according to the audio characteristic of the target audio, the static cover and the animation effect;
where the audio characteristic includes an audio beat and/or volume.

According to one or more embodiments of the present disclosure, the processing module is configured to export data associated with the target audio to a target location in response to an export instruction on a third interface; where the target location includes an album or a file system.

According to one or more embodiments of the present disclosure, the processing module is configured to share data associated with the target audio to a target application in response to a sharing instruction on a third interface.

According to one or more embodiments of the present disclosure, the data associated with the target audio includes at least one of the following:
the target audio, the vocal, the accompaniment, a vocal segment of the vocal, an accompaniment segment of the accompaniment, a static cover of the target audio, and a dynamic cover of the target audio.

According to one or more embodiments of the present disclosure, the processing module is configured to jump from a third interface to a fourth interface in response to a touch operation for an audio editing control on the third interface, where the fourth interface includes an audio processing function control or a trigger control associated with the audio processing function control, and the trigger control is used to trigger the display of the audio processing function control;
the audio processing function control includes one or more of the following:
an audio optimization control, configured to trigger editing of audio to optimize audio;
an accompaniment extraction control, configured to trigger extraction of the vocal and/or the accompaniment from audio;
a style composition control, configured to trigger extraction of the vocal from audio, and mix and edit the extracted vocal with a preset accompaniment;
an audio mashup control, configured to trigger extraction of the vocal from first audio, trigger extraction of the accompaniment from second audio, and mix and edit the extracted vocal and the extracted accompaniment.

In a third aspect, according to one or more embodiments of the present disclosure, an electronic device is provided, including: at least one processor and a memory;
the memory stores a computer-executed instruction;
the at least one processor executes the computer-executed instruction stored in the memory to enable the at least one processor to execute the audio processing method described above in the first aspect and various possible designs of the first aspect.

In a fourth aspect, according to one or more embodiments of the present disclosure, a computer-readable memory medium is provided in which the computer-readable memory medium stores a computer-executed instruction, and when the processor executes the computer-executed instruction, the audio processing method described above in the first aspect and various possible designs of the first aspect are implemented.

In a fifth aspect, according to one or more embodiments of the present disclosure, a computer program product is provided, including a computer program, when the computer program is executed by a processor, the audio processing method described above in the first aspect and various possible designs of the first aspect are implemented.

In a sixth aspect, an embodiment of the present disclosure provides a computer program, when the computer program is executed by a processor, the audio processing method described above in the first aspect and various possible designs of the first aspect are implemented.

The above description is only a better published embodiment and an explanation of the technical principles used. The person skilled in the field shall understand that the scope of disclosure covered by the present disclosure shall not be limited to technical schemes resulting from a particular combination of such technical characteristics, but shall also cover other technical schemes resulting from any combination of such technical characteristics or their equivalent without being isolated from such disclosure ideas. For example, a technical scheme formed by substituting the above features with the similar functional technical features disclosed in the present disclosure (without limitation).

Furthermore, although operations are described in a particular order, this should not be understood as requiring that they be performed in the particular order indicated or in a sequential order. In certain circumstances, multitasking and parallel processing can be beneficial. Similarly, although a number of concrete implementation details are included in the above discussion, these should not be interpreted as limiting the scope of the present disclosure. Some of the characteristics described in the context of a single embodiment can also be realized in combination in a single embodiment. Conversely, various characteristics described in the context of a single embodiment can also be realized in multiple embodiments individually or in any suitable subcombination.

Although the subject has been described in language specific to structural features and/or methodological logical actions, it should be understood that the subject defined in the attached claims is not necessarily limited to the specific features or actions described above. Rather, the specific features and actions described above are merely sample forms of implementing a claim.

## Claims

1. An audio processing method, comprising:
acquiring a vocal in response to a first instruction;
acquiring an accompaniment in response to a second instruction; and
acquiring a target audio by mixing the vocal and the accompaniment in response to a third instruction.

2. The method according to claim 1, wherein
the acquiring the vocal in response to the first instruction comprises:
importing a first audio and extracting the vocal from the first audio in response to a touch operation for a first control on a first interface;
the acquiring the accompaniment in response to the second instruction comprises:
importing second audio and extracting the accompaniment from the second audio in response to a touch operation for a second control on the first interface.

3. The method according to claim 2, wherein the acquiring the target audio by mixing the vocal and the accompaniment in response to the third instruction comprises:
acquiring the target audio by mixing the vocal and the accompaniment in response to a touch operation for a third control on the first interface.

4. The method according to any one of claims 1 to 3, wherein the acquiring the target audio by mixing the vocal and the accompaniment comprises:
acquiring a vocal segment of the vocal and an accompaniment segment of the accompaniment; and
acquiring the target audio by mixing the vocal segment and the accompaniment segment.

5. The method according to claim 4, wherein the acquiring the vocal segment of the vocal and the accompaniment segment of the accompaniment comprises:
inputting the vocal and accompaniment into a paragraph recognition model respectively to acquire the vocal segment of the vocal and the accompaniment segment of the accompaniment;
wherein the paragraph recognition model is configured to identify a target segment of audio.

6. The method according to claim 4, wherein the acquiring the vocal segment of the vocal and the accompaniment segment of the accompaniment comprises:
displaying a soundtrack of the vocal and a soundtrack of the accompaniment on a second interface in response to a touch operation for a fourth control on a first interface;
acquiring the vocal segment in response to an editing operation for the soundtrack of the vocal; and
acquiring the accompaniment segment in response to an editing operation for the soundtrack of the accompaniment.

7. The method according to any one of claims 1 to 3, wherein the acquiring the target audio by mixing the vocal and the accompaniment comprises:
acquiring a first rhythm of third audio and a second rhythm of fourth audio;
performing rhythm alignment on the first rhythm of the third audio and the second rhythm of the fourth audio; and
acquiring the target audio based on the aligned third audio and fourth audio;
wherein the third audio is one audio out of the vocal and the accompaniment, and the fourth audio is the other audio out of the vocal and the accompaniment, or, the third audio is one audio out of a vocal segment of the vocal and an accompaniment segment of the accompaniment, and the fourth audio is the other audio out of the vocal segment and the accompaniment segment.

8. The method according to claim 7, wherein the performing the rhythm alignment on the first rhythm of the third audio and the second rhythm of the fourth audio comprises:
adjusting the second rhythm of the fourth audio based on the first rhythm of the third audio to make rhythms of the third audio and the fourth audio are consistent.

9. The method according to any one of claims 2 to 3 and 6, wherein the first interface comprises:
a first playing control, a first deleting control and a first replacing control, which are associated with the vocal, the first playing control is used to audition for the vocal, the first deleting control is used to delete the vocal, and the first replacing control is used to replace the vocal; and
a second playing control, a second deleting control, and a second replacing control, which are associated with the accompaniment, the second playing control is used to audition for the accompaniment, the second deleting control is used to delete the accompaniment, and the second replacing control is used to replace the accompaniment.

10. The method according to claim 3, further comprising: jumping to a third interface in response to a touch operation for the third control on the first interface, wherein the third interface comprises a third playing control, and the third playing control is used to trigger playing of the target audio.

11. The method according to claim 3, further comprising:
displaying a first window in response to a touch operation for a cover editing control on a third interface, wherein the first window comprises a cover import control, one or more preset static cover controls, and one or more preset animation effect controls;
acquiring a target cover in response to a control selection operation on the first window;
wherein the target cover is a static cover or a dynamic cover.

12. The method according to claim 11, wherein if the target cover is the dynamic cover, the acquiring the target cover in response to the control selection operation on the first window comprises:
acquiring a static cover and animation effect in response to the control selection operation on the first window;
generating a dynamic cover changing with an audio characteristic of the target audio according to the audio characteristic of the target audio, the static cover and the animation effect;
wherein the audio characteristic comprises an audio beat and/or volume.

13. The method according to claim 3, further comprising:
exporting data associated with the target audio to a target location in response to an export instruction on a third interface, wherein the target location comprises an album or a file system.

14. The method according to claim 3, further comprising:
sharing data associated with the target audio to a target application in response to a sharing instruction on a third interface.

15. The method according to claim 13 or 14, wherein the data associated with the target audio comprises at least one of the following:
the target audio, the vocal, the accompaniment, a vocal segment of the vocal, an accompaniment segment of the accompaniment, a static cover of the target audio, and a dynamic cover of the target audio.

16. The method according to claim 3, further comprising:
jumping from a third interface to a fourth interface in response to a touch operation for an audio editing control on the third interface, wherein the fourth interface comprises an audio processing function control or a trigger control associated with the audio processing function control, and the trigger control is used to trigger display of the audio processing function control;
the audio processing function control comprises one or more of the following:
an audio optimization control, configured to trigger editing of audio to optimize audio;
an accompaniment extraction control, configured to trigger extraction of the vocal and/or the accompaniment from audio;
a style composition control, configured to trigger extraction of the vocal from audio, and mix and edit the extracted vocal with a preset accompaniment;
an audio mashup control, configured to trigger extraction of the vocal from first audio, trigger extraction of the accompaniment from second audio, and mix and edit the extracted vocal and the extracted accompaniment.

17. An audio processing apparatus, comprising:
an acquisition module, configured to acquire a vocal in response to a first instruction;
the acquisition module is further configured to acquire an accompaniment in response to a second instruction; and
a processing module, configured to acquire target audio by mixing the vocal and the accompaniment in response to a third instruction.

18. An electronic device, comprising: at least one processor and a memory;
the memory stores a computer-executed instruction;
the at least one processor executes the computer-executed instruction stored in the memory to enable the at least one processor to execute the audio processing method according to any one of claims 1 to 16.

19. A computer-readable storage medium, wherein the computer-readable memory medium stores a computer-executed instruction, and when the processor executes the computer-executed instruction, the audio processing method according to any one of claims 1 to 16 is implemented.

20. A computer program product, comprising a computer program, when the computer program is executed by a processor, the method according to any one of claims 1 to 16 is implemented.

21. A computer program, wherein when the computer program is executed by a processor, the method according to any one of claims 1 to 16 is implemented.
